(19) Europäisches Patentamt
European Patent Office
Office européen des brevets

(11) Veröffentlichungsnummer: **0 016 993**
**B1**

(12) # EUROPÄISCHE PATENTSCHRIFT

(45) Veröffentlichungstag der Patentschrift: **30.12.81**

(51) Int. Cl.³: **C 07 C 69/708,** C 07 C 67/30, C 07 F 7/18, C 08 F 4/00

(21) Anmeldenummer: **80101129.7**

(22) Anmeldetag: **06.03.80**

(54) **Substituierte Weinsäureester, Verfahren zu ihrer Herstellung und ihre Verwendung als Polymerisationsinitiatoren.**

(30) Priorität: **14.03.79 DE 2909951**

(43) Veröffentlichungstag der Anmeldung: **15.10.80 Patentblatt 80/21**

(45) Bekanntmachung des Hinweises auf die Patenterteilung: **30.12.81 Patentblatt 81/52**

(84) Benannte Vertragsstaaten: **DE FR GB IT**

(56) Entgegenhaltungen:
**AT-B-60 097**
**US-A-3 699 150**

(73) Patentinhaber: **BAYER AG, Zentralbereich Patente, Marken und Lizenzen, D-5090 Leverkusen 1, Bayerwerk (DE)**

(72) Erfinder: **Wolfers, Heinrich, Dr., Niederend 6, D-4137 Reurdt (DE)**
Erfinder: **Rudolph, Hand, Dr., Haydnstrasse 9, D-4150 Krefeld (DE)**
Erfinder: **Alberts, Heinrich, Dr., Morgengraben 16, D-5000 Koeln 80 (DE)**

**EP 0 016 993 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG.

# Substituierte Weinsäureester, Verfahren zu ihrer Herstellung und ihre Verwendung als Polymerisationsinitiatoren

Die vorliegende Erfindung betrifft neue substituierte Weinsäureester, ein Verfahren zu ihrer Herstellung aus α-Ketocarbonsäureestern und Organohalogenverbindungen bzw. Halogensilanen und ihre Verwendung als Initiatoren für radikalisch initiierbare Polymerisationsreaktionen.

Wegen der bekannten Gefahren Peroxidgruppen-haltiger Polymerisationsinitiatoren hat man bereits 1.1.2.2-Tetraaryl-1,2-dihydroxiethane, ihre Alkyl- und Silyläther als Initiatoren für thermisch initiierbare radikalische Polymerisationen vorgeschlagen (DE-AS 12 16 877, 12 19 224, DE-OS 21 31 623, 21 64 482). Ebenso sind Initiatoren vom Typ der 1,2-Diaryl-1,2-dicyano-1,2-dihalogenethane (DE-OS 24 44 252), der 1,2-Diaryl-1,1,2,2-tetracarbalkoxi-ethane (US 3 896 099) und der 1,2-Diaryl-1,1,2,2-tetramethyl-ethane mit teilweise chlorierten Methylgruppen (BE 834 599) bekannt. Auch die Lehre, dass sich Silyläther von Oligomeren, welche wiederkehrende Einheiten der Struktur

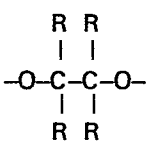
(I)

wobei R Phenyl oder Alkyl bedeutet, enthalten, zur Initiierung von Polymerisationsreaktionen teilweise bereits bei Temperaturen knapp oberhalb 40 °C eignen, zählt zum Stand der Technik (DE-OS 26 32 294, 26 56 782).

Es bestand ein Bedarf an Peroxidgruppen-freien Initiatoren, die bei Raumtemperatur in den zu polymerisierenden Verbindungen oder Gemischen lagerstabil sind, bei höheren Temperaturen die bekannten Peroxid-freien Initiatoren bei möglichst geringer Konzentration im polymerisationsfähigen System an Reaktivität noch übertreffen und gut durchgehärtete Produkte (Bestimmung durch Messen des Reststyrolgehalts) liefern.

Überraschenderweise wurde gefunden, dass die nachfolgend definierten Ether substituierter Weinsäureester diesen Forderungen gerecht werden. Zudem besitzen sie den Vorteil, beim Zerfall in Radikale keine flüchtigen Bruchstücke freizusetzen, die im Polymerisat eine unerwünschte Blasenbildung hervorrufen könnten.

Gegenstand der Erfindung sind Ether 1,2-disubstituierter Weinsäureester der Formel

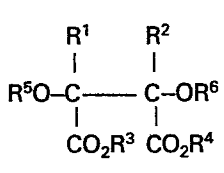
(II)

worin

$R^1$, $R^2$ gegebenenfalls durch Methoxi, Chlor oder Fluor substituierte lineare oder verzweigte Alkylreste mit 1–10 C-Atomen, vorzugsweise Methyl, Ethyl, Isopropyl, tert.-Butyl, Isobutyl, n-Butyl, Hexyl, Octyl; gegebenenfalls durch $C_1$–$C_4$-Alkyl, Methoxy, Chlor oder Fluor substituierte Cycloalkylreste mit 5–7 C-Atomen, vorzugsweise Cyclopentyl, Cyclohexyl; gegebenenfalls durch $C_1$–$C_4$-Alkyl, Methoxi, Chlor oder Fluor substituierte Aralkylreste mit 7–10 C-Atomen, vorzugsweise Benzyl; gegebenenfalls durch $C_1$–$C_4$-Alkyl, Methoxi, Chlor oder Fluor substituierte Arylreste mit 6–12 C-Atomen, vorzugsweise Phenyl, Tolyl, Chlorphenyl, Dichlorphenyl, Naphthyl, Biphenylyl, tert.-Butylphenyl,

$R^3$, $R^4$ gegebenenfalls durch Methoxi, Chlor oder Fluor substituierte lineare oder verzweigte Alkylreste mit 1–18 C-Atomen, vorzugsweise Methyl, Ethyl, Isopropyl, Butyl, Hexyl, Octyl, Lauryl, Stearyl; gegebenenfalls durch $C_1$–$C_4$-Alkyl, Methoxi, Chlor oder Fluor substituierte Cycloalkylreste mit 5–7 C-Atomen, vorzugsweise Cyclohexyl; gegebenenfalls durch $C_1$–$C_4$-Alkyl, Methoxi, Chlor oder Fluor substituierte Aralkylreste mit 7–10 C-Atomen, vorzugsweise Benzyl, β-Phenylethyl; gegebenenfalls durch $C_1$–$C_4$-Alkyl, Methoxi, Chlor oder Fluor substituierte Arylreste mit 6–10 C-Atomen, vorzugsweise Phenyl, Tolyl, Chlorphenyl, Naphthyl; Trimethylsilyl, Triethylsilyl oder Triphenylsilyl,

$R^5$, $R^6$ 1) ein Wasserstoffatom mit der Massgabe, dass höchstens einer der beiden Substituenten ein Wasserstoffatom ist,

2) gegebenenfalls durch Methoxi, Chlor oder Fluor substituierte Alkylreste mit 1–10 C-Atomen, vorzugsweise Methyl, Ethyl, Isopropyl, Isobutyl, Hexyl, Octyl; gegebenenfalls durch $C_1$–$C_4$-Alkyl, Methoxi, Chlor oder Fluor substituierte Cycloalkylreste mit 5–7 C-Atomen, vorzugsweise Cyclohexyl; gegebenenfalls durch $C_1$–$C_4$-Alkyl, Methoxi, Chlor oder Fluor substituierte Aralkylreste mit 7–10 C-Atomen, vorzugsweise Benzyl, β-Phenylethyl, oder

3) $SiR^7R^8(O_nSiR^9R^{10})_mR^{11}$ bedeuten und

$R^7$, $R^8$, $R^{11}$

a) Methyl, Ethyl, Phenyl, Benzyl, Chlormethyl, Hydroxyl, Methoxi, Ethoxi oder

b) einen Rest der Formel

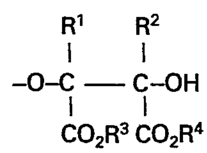
(III)

oder

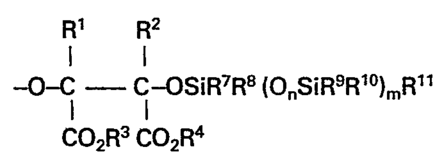
(IV)

darstellen,

$R^9$, $R^{10}$ die unter 3a) angegebene Bedeutung haben und
n für 0 oder 1,
m für 0 oder eine ganze Zahl von 1 bis 10 stehen, wobei die Verbindungen der Formel II im Falle 3) die über Siliciumatome bzw. Siliciumatom-haltige Gruppen verknüpfte Teilstruktur

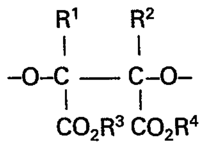 (V)

ein- bis zehnmal enthalten können und in den $SiR^7R^8(O_nSiR^9R^{10})_mR^{11}$-Resten, wenn sie als Endgruppen fungieren, die Substituenten $R^7$, $R^8$ und $R^{11}$ die unter 3a) angegebene Bedeutung haben.

Die erfindungsgemässen Verbindungen lassen sich durch Umsetzung der α-Ketoester

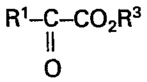 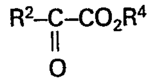

(VI) (VII)

und der entsprechenden Halogenverbindung in Gegenwart einer etwa äquivalenten Menge eines unedlen Metalls in einem inerten aprotischen Lösungsmittel herstellen.

Ein weiterer Gegenstand der Erfindung ist also ein Verfahren zur Herstellung der Verbindungen II, dadurch gekennzeichnet, dass man je 1/2 Mol α-Ketoester der Formeln

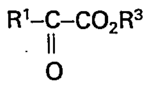 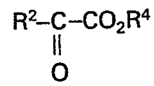

(VI) (VII)

in Gegenwart der etwa äquivalenten Menge eines unedlen Metalls mit
0,4 bis 1,2, vorzugsweise 0,5 bis 1,1 Mol einer Organohalogenverbindung

$R^5X$ bzw. $R^6X$
(VIII) (IX)

wobei X für Chlor, Brom oder Jod steht und $R^5$ und $R^6$ die oben unter 2) angegebene Bedeutung haben, oder mit
0,4 bis 1,2, vorzugsweise 0,5 bis 1,1 Mol, eines Monochlororganosilans, -di- oder -polysilans, -di- oder -polysiloxans der Formel

$$ClSiR^7R^8(O_nSiR^9R^{10})_mR^{11} \quad (X)$$

oder mit
0,3 bis 0,8, vorzugsweise 0,4 bis 0,6 Mol eines Dichlororganosilans, -di- oder -polysilans, -di- oder -polysiloxans der Formel

$$Cl_2SiR^7(O_nSiR^9R^{10})_mR^{11} \quad (XI)$$

oder mit
0,2 bis 0,6, vorzugsweise 0,2 bis 0,4 Mol eines Trichlororganosilans, -di- oder -polysilans, -di- oder -polysiloxans der Formel

$$Cl_3Si(O_nSiR^9R^{10})_mR^{11} \quad (XII)$$

wobei die Substituenten für die Formeln X–XII jeweils die oben unter 3a) und die Indices die oben angegebene Bedeutung haben,
oder mit 0,1 bis 0,7, vorzugsweise 0,2 bis 0,5 Mol Tetrachlorsilan bei −10 bis +70 °C – sofern notwendig, unter Kühlung – in einem inerten aprotischen Lösungsmittel solange umsetzt, bis die exotherme Reaktion beendet ist, dass man dann hydrolysiert, die organische Phase abtrennt und das Lösungsmittel abzieht.

Ein weiterer Gegenstand der Erfindung ist die Verwendung der erfindungsgemässen Verbindungen II als Initiatoren für radikalisch initiierbare Polymerisationsreaktionen.

«Unedle Metalle» im Sinne der Erfindung sind solche, die zur Bildung der Dianionen

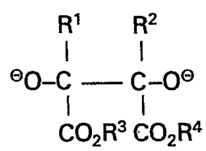 (XIII)

aus den α-Ketoestern VI und VII befähigt sind; sie finden sich vorzugsweise in der 1. Hauptgruppe, der 2. Haupt- und Nebengruppe und in der 3. Hauptgruppe des Periodensystems (U. Hofmann u. W. Rüdorff, Anorganische Chemie, 16. Aufl., Friedr. Vieweg & Sohn, Braunschweig, 1966, S. 150). Typische Vertreter unedler Metalle zur Verwendung im erfindungsgemässen Verfahren sind Lithium, Natrium, Magnesium, Calcium, Zink und Aluminium.

«Etwa äquivalenten Mengen» eines unedlen Metalls bedeutet, dass man pro Mol α-Ketoester VI bzw. VII ca. 1 Mol eines einwertigen Metalls, ca. 0,5 Mol eines zweiwertigen Metalls oder ca. 1/3 Mol eines dreiwertigen Metalls einsetzt.

Die Verbindungen VI und VII können identisch sein; dies bedeutet $R^1=R^2$ und $R^3=R^4$.

Die Reaktion wird vorzugsweise bei −5 bis +50 °C – sofern notwendig unter Kühlung – durchgeführt werden.

Das Lösungsmittel wird im allgemeinen bei Temperaturen von 0–120, vorzugsweise 20–60 °C und einem Druck von 1–760, vorzugsweise 10–200 Torr abgezogen.

Die aus Ketoestern, unedlen Metallen und Chlorsilanen, -di- oder -polysilanen, -di- oder -polysiloxanen hergestellten erfindungsgemässen Verbindungen II können ein als Zahlenmittel bestimmtes Molekulargewicht von 500–6000, vorzugsweise von 800–4000, aufweisen.

Das Molekulargewicht der erfindungsgemässen Silylether II wird bis zu einem Molekulargewicht von 3000 dampfdruckosmometrisch, bei einem Molekulargewicht oberhalb 3000 membranosmometrisch, jeweils in Aceton als Lösungsmittel, bestimmt. Die Molekulargewichte einzelner Fraktionen der erfindungsgemässen Reaktionsgemische lassen sich gelchromatographisch (mittels Eichsubstanzen) bestimmen.

Normalerweise werden die bei der Herstellung anfallenden Reaktionsgemische, die im Fall 3) Oligomere verschiedenen Molekulargewichts enthalten, ohne Auftrennung in die reinen Substanzen direkt als Polymerisationsinitiatoren eingesetzt.

Als bevorzugte Beispiele für erfindungsgemäss einzusetzende unedle Metalle, α-Ketoester und Organohalogenverbindungen bzw. Chlorsilane, Di- oder Polysil(ox)ane können die in der folgenden Tabelle aufgeführten Kombinationen dienen.

| Initiator | unedles Metall | α-Ketocarbonsäure-ester | Halogenver-bindung |
|---|---|---|---|
| 1. | Magnesium | Phenylglyoxylsäure-methylester | Methyljodid |
| 2. | Magnesium | Phenylglyoxylsäure-methylester | Isopropylbromid |
| 3. | Lithium | do. | Benzylchlorid |
| 4. | Lithium | Phenylglyoxylsäure-methylester | Cyclohexylbromid |
| 5. | Magnesium | t-Butylglyoxylsäure-ethylester | Benzylchlorid |
| 6. | Magnesium | Brenztraubensäure-ethylester | Hexylbromid |
| 7. | Magnesium | Phenylglyoxylsäure-methylester | Chlortrimethyl-silan |
| 8. | Magnesium | Phenylglyoxylsäure-methylester | Dichlordimethyl-silan |
| 9. | Magnesium | Phenylglyoxylsäure-methylester | Trichlormethyl-silan |
| 10. | Magnesium | Phenylglyoxylsäure-methylester | Tetrachlorsilan |
| 11. | Lithium | Phenylglyoxylsäure-methylester | Diphenyldichlorsilan |
| 12. | Lithium | Phenylglyoxylsäure-hexylester | Dichlordimethylsilan |
| 13. | Calcium | Phenylglyoxylsäure-hexylester | Trichlormethylsilan |
| 14. | Magnesium | 4-Methylphenylglyoxyl-säuremethylester | Trichlormethylsilan |
| 15. | Magnesium | 4-Chlorphenylglyoxyl-säurehexylester | Dichlordimethylsilan |
| 16. | Magnesium | Phenylglyoxylsäure-laurylester | Chlortriethylsilan |
| 17. | Aluminium | 4-Biphenylylglyoxyl-säureethylester | Tetrachlorsilan |
| 18. | Natrium | Phenylglyoxylsäure-methylester | Chlortrimethylsilan |
| 19. | Magnesium | Brenztraubensäure-ethylester | Chlortrimethylsilan |
| 20. | Magnesium | Brenztraubensäure-ethylester | Tetrachlorsilan |
| 21. | Magnesium | tert.-Butylglyoxyl-säurehexylester | Chlortriethylsilan |
| 22. | Magnesium | tert.-Butylglyoxyl-säurehexylester | Trichlormethylsilan |
| 23. | Magnesium | Cyclohexylglyoxylsäure-hexylester | Chlortrimethylsilan |
| 24. | Magnesium | sek.-Butylglyoxylsäure-hexylester | Trichlormethylsilan |
| 25. | Magnesium | n-Hexylglyoxylsäure-methylester | Chlortrimethylsilan |
| 26. | Magnesium | Isopropylglyoxyl-säurebenzylester | Dichlordiphenyl-silan |

Bevorzugte inerte aprotische Lösungsmittel sind Aromaten und Alkylaromaten, wie Benzol und Toluol, Ether wie Diethylether, Diisopropylether, Dibutylether, Anisol, Tetrahydrofuran, Dioxan, 1,2-Dimethoxyethan, Trialkylphosphate wie Triethylphosphat, Tributylphosphat; N,N-disubstituierte Amide wie Dimethylformamid, N,N-Dimethylacetamid und Phosphorsäuretris-(dimethylamid). Weitere inerte aprotische Lösungsmittel sind in Methoden der Organischen Chemie (Houben-Weyl), Bd. XIII/2 a, S. 59–70, Georg Thieme-Verlag, Stuttgart 1973, beschrieben. Als besonders geeignet erwiesen sich Lösungsmittel bestehend aus 0–80 Gew.-Teilen Benzol oder Toluol, 1–100 Gew.-Teilen Tetrahydrofuran oder 0–50 Gew.-Teilen Triethylphosphat oder Phosphorsäuretris-(dimethylamid). Um das Reaktionsgemisch nicht unnötig zu verdünnen, wird im allgemeinen möglichst wenig Lösungsmittel eingesetzt. In der Regel ist ein Ketoester/Lösungsmittel-Gewichtsverhältnis von 1:2 vollkommen ausreichend.

Es empfiehlt sich zu berücksichtigen, dass unter den Reaktionsbedingungen schon teilweise Zersetzung möglich ist. Falls also die erfindungsgemässen Verbindungen II geringe Reaktivität aufweisen sollten, die auf eine Zersetzung der als Initiator wirksamen Verbindungen während der Herstellung zurückzuführen ist, wird man die Reaktionstemperatur herabsetzen.

Es ist möglich, durch eine einfache Farbreaktion die Dissoziationstemperaturen der erfindungsgemässen Verbindungen II festzustellen. Die bei der thermischen Zersetzung entstehenden Radikale können nämlich chinoide Farbstoffe entfärben. Zur Durchführung des Tests löst man eine geringe Menge chinoiden Farbstoffs, z.B. Methylenblau, Thionin oder Neutralrot, in einem Lösungsmittel, das frei von molekularem Sauerstoff ist, z.B. Glykol, Xylol, und setzt eine mindestens äquivalente Menge der erfindungsgemässen Verbindungen II zu. Die Temperatur, bei der der Farbstoff entfärbt wird, ist die Dissoziationstemperatur des Initiators.

Die Dissoziationstemperatur hängt stark von der Struktur der Verbindungen II ab. Initiatoren mit raumfüllenden (z.B. Aryl oder tert.-Butyl) Resten $R^1$ und $R^2$ zeichnen sich durch eine relativ niedrige Dissoziationstemperatur aus; Initiatoren, bei denen die Substituenten $R^1$ und $R^2$ primäre oder sekundäre Alkyl- bzw. Aralkylgruppen bedeuten, zerfallen erst bei höheren Temperaturen in Radikale. Daneben sind aber auch die anderen Substituenten für die Spaltungstendenz der erfindungsgemässen Verbindungen II von Bedeutung.

Der Zerfall der erfindungsgemässen Verbindungen bzw. Gemische erfolgt im Gegensatz zu Peroxiden ohne Freisetzung von Wärme. Auch führen die erfindungsgemässen Produkte in Gegenwart von Peroxiden nicht zu induzierter Zersetzung des Peroxids. Sie sind somit auch zur Nachtemperung kalt gehärteter Formteile aus ungesättigten Polyesterharzen oder zur Phlegmatisierung peroxidischer Initiatoren geeignet.

Als Substanzen, deren Polymerisation durch die erfindungsgemässen Verbindungen II initiiert werden kann, kommen alle radikalisch polymerisierbaren Verbindungen oder Gemische in Betracht, z.B. also Olefine wie Ethylen, konjugierte Diene wie Butadien, Isopren, Chloropren; Vinylchlorid, Vinylidenchlorid; aromatische Vinylverbindungen wie Styrol, Divinylbenzol; Vinylester, insbesondere Vinylacetat und Vinylpropionat; Vinylether wie Vinylpropylether. Vinylisobutylether: Acrylsäure und Methacrylsäure und deren Derivate wie Ester, insbesondere mit aliphatischen Alkoholen mit 1 bis 5 C-Atomen, Nitrile, Amide usw.: Di(vinylphenyl)carbonate; Diallylphthalat. Diallylcarbonat, Diallylfumarat; Di(allylphenyl)-carbonate; Polyol-poly(meth)acrylate; N,N'-Methylen-bis-(meth)acrylamid.

Besonders bevorzugte zu polymerisierende Substanzen sind ungesättigte Polyesterharze, d.h. die Lösungen α,β-ethylenisch ungesättigter Polyester in damit copolymerisierbaren Monomeren. Überraschenderweise wurde nämlich bei der Untersuchung der ungesättigten Polyesterharze, die mit den erfindungsgemässen Verbindungen II heiss gehärtet worden waren, festgestellt, dass die Reststyrolgehalte niedriger als bei Verwendung vergleichbarer bekannter Initiatoren vom Dibenzyltyp waren.

Bevorzugte α,β-ethylenisch ungesättigte Polyester sind die üblichen Polykondensationsprodukte mindestens einer α,β-ethylenisch ungesättigten Dicarbonsäure mit in der Regel 4 oder 5 C-Atomen oder deren esterbildenden Derivate, z.B. ihren Anhydriden, gegebenenfalls in Abmischung mit bis zu 200 Mol-%, bezogen auf die ungesättigten Säurekomponenten, mindestens einer aliphatischen gesättigten mit 4–10 C-Atomen oder einer cycloaliphatischen oder aromatischen Dicarbonsäure mit 8–10 C-Atomen oder deren esterbildenden Derivate mit mindestens einer Polyhydroxiverbindung, insbesondere Dihydroxiverbindung, mit 2–8 C-Atomen – also Polyester, wie sie bei J. Björksten et al., «Polyesters and their Applications», Reinhold Publishing Corp., New York 1956, beschrieben sind.

Beispiele für bevorzugt zu verwendende ungesättigte Dicarbonsäuren oder ihre Derivate sind Maleinsäure oder Maleinsäureanhydrid und Fumarsäure. Verwendet werden können z.B. jedoch auch Mesaconsäure, Citraconsäure, Itaconsäure oder Chlormaleinsäure. Beispiele für die zu verwendenden aliphatischen gesättigten und cycloaliphatischen bzw. aromatischen Dicarbonsäuren oder ihre Derivate sind Phthalsäure oder Phthalsäureanhydrid, Isophthalsäure, Terephthalsäure, Hexa- oder Tetrahydrophthalsäure bzw. deren Anhydride, Endomethylentetrahydrophthalsäure oder deren Anhydrid, Bernsteinsäure bzw. Bernsteinsäureanhydrid und Bernsteinsäureester und -chloride, Adipinsäure, Sebacinsäure. Um schwer entflammbare Harze herzustellen, können z.B. Hexachlorendomethylentetrahydrophthalsäure, Tetrachlorphthalsäure oder Tetrabromphthalsäure verwendet werden. Als zweiwertige Alkohole können Ethylenglykol, Propandiol-1,2, Propandiol-1,3, Diethylenglykol, Dipropylenglykol, Butandiol-1,3, Butandiol-1,4, Neopentylglykol, Hexandiol-1,6,

2,2-Bis(4-hydroxycyclohexyl)-propan, bis-oxalkyliertes Bisphenol A, Perhydrobisphenol und andere eingesetzt werden. Bevorzugt verwendet werden Ethylenglykol, Propandiol-1,2, Diethylenglykol und Dipropylenglykol.

Weitere Modifikationen sind möglich durch Einbau ein-, drei- und vierwertiger Alkohole mit 1–6 C-Atomen, wie Methanol, Ethanol, Butanol, Allylalkohol, Benzylalkohol, Cyclohexanol und Tetrahydrofurfurylalkohol, Trimethylolpropan, Glycerin und Pentaerythrit sowie von Mono-, Di- und Triallylethern und Benzylethern drei- und mehrwertiger Alkohole mit 3–6 C-Atomen gemäss DE-AS 1 024 654, sowie durch Einbau einbasischer Säuren wie Benzoesäure, oder langkettiger ungesättigter Fettsäuren wie Ölsäure, Leinölfettsäure und Ricinenfettsäure.

Die Säurezahlen der Polyester liegen gewöhnlich zwischen 1 und 100, vorzugsweise zwischen 20 und 70, die OH-Zahlen zwischen 10 und 150, vorzugsweise zwischen 20 und 100, und die als Zahlenmittel bestimmten Molekulargewichte $\overline{M}_n$ zwischen ca. 500 und 5000, vorzugsweise zwischen ca. 1000 und 3000 (dampfdruckosmometrisch gemessen in Dioxan und Aceton; bei differierenden Werten wird der niedrigere als der korrekte angesehen).

Als mit den ungesättigten Polyestern copolymerisierbare Vinyl- und Vinylidenverbindungen eignen sich in der Polyestertechnologie gebräuchliche ungesättigte Verbindungen, die bevorzugt α-substituierte Vinylgruppen oder β-substituierte Allylgruppen tragen, bevorzugt Styrol; aber auch beispielsweise kernchlorierte und -alkylierte bzw. -alkenylierte Styrole, wobei die Alkylgruppen 1–4 Kohlenstoffatome enthalten, können, z.B. Vinyltoluol, Divinylbenzol, α-Methylstyrol, tert.-Butylstyrol, Chlorstyrole; Vinylester von Carbonsäuren mit 2–6 Kohlenstoffatomen, bevorzugt Vinylacetat; Vinylpyridin, Vinylnaphthalin, Vinylcyclohexan, Acrylsäure und Methacrylsäure und/oder ihre Ester (vorzugsweise Vinyl-, Allyl- und Methallylester) mit 1–4 Kohlenstoffatomen in der Alkoholkomponente, ihre Amide und Nitrile, Maleinsäureanhydrid, -halb- und diester mit 1–4 Kohlenstoffatomen in der Alkoholkomponente, -halb- und -diamide oder cyclische Imide wie N-Methylmaleinimid oder N-Cyclohexylmaleinimid; Allylverbindungen wie Allylbenzol und Allylester wie Allylacetat, Phthalsäurediallylester, Isophthalsäurediallylester, Fumarsäurediallylester, Allylcarbonate, Diallylcarbonate, Triallylphosphat und Triallylcyanurat.

Die erfindungsgemässen Verbindungen II sind teilweise bereits bei Temperaturen oberhalb 40 °C wirksam. Eine vollständige und rasche Durchhärtung wird in der Regel bei Einsatz von 0,02 bis 1, vorzugsweise 0,05 bis 0,8, Gew.-% erfindungsgemässer Verbindungen II, bezogen auf die zu polymerisierende Substanz, erreicht.

Der Beginn der Polymerisationsreaktion wird durch Erhitzen einer Mischung aus zu polymerisierender Substanz und erfindungsgemässer Verbindung II über eine konkrete, im Einzelfall leicht zu bestimmende Anspringtemperatur, erreicht. Die Härtung radikalisch polymerisierbarer Systeme erfolgt in der Regel zwischen 60 und 200 °C.

Die Härtung kann in einem Zuge, falls erwünscht aber auch stufenweise, erfolgen (vgl. GB-PS 1 041 641).

Die nachstehenden Beispiele erläutern die Erfindung.

Im folgenden angegebene Teile sind Gewichtsteile; Prozentangaben erfolgen als Gewichtsprozente.

Beispiel 1

In einem Lösungsmittelgemisch aus 100 g Toluol und 500 g Tetrahydrofuran werden 0,1 g $HgCl_2$, 12,2 g Magnesiumspäne und 20 g Phenylglyoxylsäuremethylester vorgelegt. Bei einer Temperatur von +5 bis +30 °C wird dann langsam eine Mischung von 144 g Phenylglyoxylsäuremethylester und 125 g Isopropylbromid zugetropft. Nach kurzer Zeit springt die stark exotherme Reaktion an und bei der weiteren Zugabe der Isopropylbromid-haltigen Lösung löst sich das Magnesium auf. Nach Beendigung der Reaktion wird noch 5 Stunden bei 30 °C gerührt, der Ansatz auf +5 °C abgekühlt, vorsichtig mit 200 ml Wasser hydrolysiert und mit 10 ml 18%iger Salzsäure angesäuert. Die organische Phase wird mit 300 ml Toluol verdünnt, dann abgetrennt und dreimal mit Wasser gewaschen. Nach dem Abziehen des Lösungsmittels bleiben 150 g Rückstand, der nach NMR-spektroskopischer Untersuchung zu ca. 25 Mol-% aus 1,2-Diphenyl-1,2-diisopropoxibernsteinsäuredimethylester, zu ca. 45 Mol-% aus 1,2-Diphenyl-1-hydroxi-2-isopropoxibernsteinsäuredimethylester und zu 30 Mol-% aus 1,2-Diphenylweinsäuredimethylester besteht.

Beispiel 2

Beispiel 1 wurde wiederholt; anstelle des Isopropylbromids wurden jedoch 140 g Methyljodid zugegeben.

Ausbeute: 148 g, davon ca.

| | |
|---|---|
| 30 Mol-% | 1,2-Diphenyl-1,2-dimethoxibernsteinsäuredimethylester |
| 40 Mol-% | 1,2-Diphenyl-1-hydroxi-2-methoxibernsteinsäuredimethylester |
| 30 Mol-% | 1,2-Diphenyl-weinsäuredimethylester |

Beispiel 3

Beispiel 1 wurde wiederholt, der Phenylglyoxylsäuremethylester wurde jedoch vollständig vorgelegt und anstelle des Isopropylbromids wurden 115 g Trimethylchlorsilan zugetropft.

Ausbeute: 160 g, Si-Gehalt: 6,2%
Zusammensetzung
(NMR-spektroskopisch bestimmt):

| | |
|---|---|
| 35 Mol-% | 1,2-Diphenyl-1,2-bis-(trimethylsiloxi)-bernsteinsäuredimethylester |
| 35 Mol-% | 1,2-Diphenyl-1-hydroxi-2-trimethylsiloxibernsteinsäuredimethylester |
| 30 Mol-% | 1,2-Diphenyl-weinsäuredimethylester. |

Beispiel 4

In einem Lösungsmittelgemisch aus 500 g Toluol, 100 g Phosphorsäuretris-(dimethylamid) und 50 g Tetrahydrofuran werden 24,3 g Magnesium und 328 g Phenylglyoxylsäuremethylester vorgelegt. Bei einer Temperatur von 15–30 °C werden 15 g Trichlormethylsilan zugegeben. Wenn die Reaktion in Gang gekommen ist (exotherme Reaktion), werden bei 25–35 °C weitere 95 g Trichlormethylsilan zugetropft. Dabei löst sich das Magnesium vollständig auf. Nach Beendigung der Reaktion wird noch 4 Stunden bei 30 °C gerührt, die Lösung auf +5 °C abgekühlt und mit 600 ml Wasser hydrolysiert. Dabei sollte die Temperatur +20 °C nicht übersteigen. Anschliessend wird noch 2 Stunden bei 30 °C gerührt, die organische Phase abgetrennt, dreimal mit je 400 ml Wasser gewaschen und bei 30 °C im Wasserstrahlvakuum eingeengt. Als Rückstand bleibt eine hochviskose Flüssigkeit, die bald zu einem wachsartigen Festkörper erstarrt.

Die Gelchromatographie wurde mit einer niedermolekulartrennenden Säulenkombination, gefüllt mit ®Styragel verschiedener Porenweite (mit Divinylbenzol hochvernetztes Polystyrol der Fa. Waters-Messtechnik), durchgeführt; als Elutierungsmittel wurde Tetrahydrofuran eingesetzt. Die Eichung erfolgte mit Phenylglyoxylsäuremethylester. Damit korreliert, ergibt sich folgende Molekulargewichtsverteilung:

| Komponente | Molekular-gewicht | Flächenprozent |
|---|---|---|
| 1 | 164 | 2,2 |
| 2 | 330 | 3,0 |
| 3 | 400 | 4,6 |
| 4 | 480 | 2,4 |
| 5 | 700 | 12,0 |
| 6 | 800 | 14,8 |
| 7 | 1240 | 34,6 |
| 8 | 1900 | 20,3 |
| 9 | 2200 | 6,1 |

Beispiel 5

Beispiel 4 wird wiederholt, anstelle des Phenylglyoxylsäuremethylesters werden jedoch 428 g tert.-Butylglyoxylsäurehexylester eingesetzt. Nach der Aufarbeitung bleibt ein öliges Produkt zurück, dessen Gelchromatographie folgende Molekulargewichtsverteilung ergibt:

| Komponente | Molekular-gewicht | Flächenprozent |
|---|---|---|
| 1 | 154 | 5,5 |
| 2 | 310 | 4,2 |
| 3 | 380 | 2,7 |
| 4 | 700 | 14,4 |
| 5 | 840 | 16,0 |
| 6 | 1200 | 24,8 |
| 7 | 1840 | 14,0 |
| 8 | 2320 | 13,7 |
| 9 | 3000 | 4,7 |

Beispiel 6

In einem Lösungsmittelgemisch aus 250 ml abs. Tetrahydrofuran und 50 ml Triethylphosphat werden 6 g Natrium in Fäden eingepresst. Bei −5 bis 10 °C tropft man dazu eine Lösung von 68 g 4-Chlorphenylglyoxylsäurehexylester und 18 g Dichlordimethylsilan in 50 ml abs. Tetrahydrofuran. Wenn das Natrium vollständig gelöst ist, wird noch 3 Stunden gerührt und der Ansatz anschliessend mit 300 g Eis hydrolysiert. Nach mehrmaligem Waschen mit Eiswasser wird die organische Phase im Wasserstrahlvakuum bei 15 °C eingeengt.

Nach dem Abziehen des Lösungsmittels bleiben 101 g flüssiger Rückstand, der zu ca. 35 Gew.-% aus Triethylphosphat besteht.

Beispiel 7

Ein ungesättigter Polyester, hergestellt aus 11 Teilen Phthalsäureanhydrid, 47 Teilen Maleinsäureanhydrid und 42 Teilen Propylenglykol-1,2 bei 200 °C (Säurezahl 20, OH-Zahl 30, Viskosität bei 20 °C: 1500 cP), wird 66%ig in Styrol gelöst und mit 0,01 Teil Hydrochinon stabilisiert. In 100 Teilen dieses ungesättigten Polyesterharzes wird 1 Teil der Verbindung II (vgl. S. 10, 11) oder Benzpinakol gelöst.

Eine Stunde nach der Zugabe des Initiators werden 20 g eines Harzansatzes in ein Reagenzglas von 16 mm Durchmesser gefüllt. Ein Eisen/Konstantan-Thermoelement, das mit einem Temperatur-Zeit-Schreiber verbunden ist, wird 3 cm tief in das Harz eingetaucht und das zu 8 cm gefüllte Reagenzglas nach dem Einschalten des Messgerätes in ein siedendes Wasserbad gestellt. Analog DIN 16 945 werden die Härtungszeiten $t_H$ (Zeit bis zum Erreichen der Spitzentemperatur minus Zeit bis zum Überschreiten der 65 °C-Linie) und die Spitzentemperatur ($T_m$) bestimmt.

Die Reststyrolgehalte wurden jodometrisch nach dem von B. Alt, Kunststoffe 52, 133 (1962) beschriebenen Verfahren analysiert.

| Initiator | $t_H$ (min) | $T_m$ (°C) | Reststyrol-gehalt (%) |
|---|---|---|---|
| 1 | 5,2 | 235 | 0,35 |
| 5 | 9,8 | 215 | 0,32 |
| 7 | 4,8 | 230 | 0,28 |
| 9 | 4,8 | 230 | 0,30 |
| 14 | 4,9 | 230 | 0,30 |
| 21 | 8,7 | 210 | 0,45 |
| 23 | 10,4 | 190 | 0,60 |
| Benzpinakol* | 11,0 | 205 | 0,70 |

* Vergleichsversuch

Beispiel 8

Beispiel 7 wurde wiederholt; als Heizbad wurde allerdings ein auf 140 °C thermostatisiertes Ölbad verwendet.

| Initiator | $t_H$ (min) | $T_m$ (°C) |
|---|---|---|
| 6 | 14,5 | 210 |
| 19 | 13,0 | 225 |
| 23 | 5,0 | 250 |
| 24 | 8,2 | 240 |

Beispiel 9

Zu 150 g einer 40%igen Lösung von Styrol in 1,2-Dichlorethan werden 0,2 g einer erfindungsgemässen Verbindung II gegeben.

Jede Probe wird 4 Stunden unter Rückfluss gekocht, dann mit 0,5 ml einer 1%igen Lösung von Benzochinon in Ethylacetat versetzt und anschliessend bei 35 °C Badtemperatur am Rotationsverdampfer eingeengt. Die Badtemperatur wird langsam auf 60 °C bei 14 Torr gesteigert und dann für 4 Stunden auf 95 °C eingestellt. Evtl. noch vorhandene Restmonomere werden durch Tempern des Polymerisats bis zur Gewichtskonstanz im Vakuumtrockenschrank bei 140 °C entfernt. Das als Rückstand verbleibende Polystyrol wird ausgewogen.

Folgende Initiatoren der auf den Seiten 10–12 aufgeführten Beispiele wurden untersucht:

| Initiator | Polystyrol | Umsatz (% d. Th.) |
|---|---|---|
| – | 0,2 | 0,3 |
| 2 | 14,1 | 23 |
| 5 | 7,0 | 12 |
| 7 | 16,4 | 27 |
| 9 | 13,2 | 22 |
| 15 | 14,4 | 24 |
| 21 | 6,9 | 12 |
| 26 | 3,2 | 5 |

Beispiel 10

Ein 2000 ml Rührautoklav wurde mit 1 l Heptan und 1 g der Verbindung II (Initiatoren 12 bzw. 16; vgl. S. 11) beschickt. Die Lösung wurde mit Stickstoff gespült und anschliessend bei Raumtemperatur 430 g Ethylen aufgepresst. Der Autoklav wurde langsam bis auf 130 °C erhitzt. Dabei stieg der Reaktorinnendruck bis auf 450 bar, fiel aber im Verlaufe von 60 Minuten wieder auf 300 bzw. 280 bar ab. Der Autoklav wurde noch 2 Stunden bei 130 °C belassen, abgekühlt und entspannt. Nach dem Öffnen des Reaktors wurde das Ethylenpolymere mit der Heptanlösung entnommen, filtriert, gewaschen und bei 50 °C bis zur Gewichtskonstanz getrocknet.

Bei Verwendung von Initiator 12 wurden 180 g Polymerisat mit einem Schmelzpunkt von 110–113 °C erhalten.

Bei Verwendung von Initiator 16 wurden 164 g Polymerisat mit einem Schmelzpunkt von 110–114 °C erhalten.

## Patentansprüche

1. Ether 1,2-disubstituierter Weinsäureester der Formel

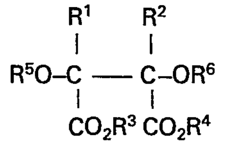

(II)

worin

$R^1$, $R^2$ gegebenenfalls durch Methoxi, Chlor oder Fluor substituierte lineare oder verzweigte Alkylreste mit 1–10 C-Atomen, gegebenenfalls durch $C_1$–$C_4$-Alkyl, Methoxi, Chlor oder Fluor substituierte Cycloalkylreste mit 5–7 C-Atomen, gegebenenfalls durch $C_1$–$C_4$-Alkyl, Methoxi, Chlor oder Fluor substituierte Aralkylreste mit 7–10 C-Atomen, gegebenenfalls durch $C_1$–$C_4$-Alkyl, Methoxi, Chlor oder Fluor substituierte Arylreste mit 6–12 C-Atomen,

$R^3$, $R^4$ gegebenenfalls durch Methoxi, Chlor oder Fluor substituierte lineare oder verzweigte Alkylreste mit 1–18 C-Atomen, gegebenenfalls durch $C_1$–$C_4$-Alkyl, Methoxi, Chlor oder Fluor substituierte Cycloalkylreste mit 5–7 C-Atomen, gegebenenfalls durch $C_1$–$C_4$-Alkyl, Methoxi, Chlor oder Fluor substituierte Aralkylreste mit 7–10 C-Atomen, gegebenenfalls durch $C_1$–$C_4$-Alkyl, Methoxi, Chlor oder Fluor substituierte Arylreste mit 6–10 C-Atomen, Trimethylsilylreste, Triethylsilylreste oder Triphenylsilylreste,

$R^5$, $R^6$

1) ein Wasserstoffatom mit der Massgabe, dass höchstens einer der beiden Substituenten ein Wasserstoffatom ist,

2) gegebenenfalls durch Methoxi, Chlor oder Fluor substituierte Alkylreste mit 1–10 C-Atomen, gegebenenfalls durch $C_1$–$C_4$-Alkyl, Methoxi, Chlor oder Fluor substituierte Cycloalkylreste mit 5–7 C-Atomen, gegebenenfalls durch $C_1$–$C_4$-Alkyl, Methoxi, Chlor oder Fluor substituierte Aralkylreste mit 7–10 C-Atomen, oder

3) $SiR^7R^8(O_nSiR^9R^{10})_mR^{11}$ bedeuten und

$R^7$, $R^8$, $R^{11}$ a) Methyl, Ethyl, Phenyl, Benzyl, Chlormethyl, Hydroxyl, Methoxi, Ethoxi oder

b) einen Rest der Formel

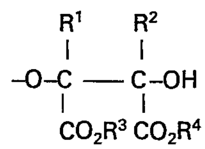

(III)

oder

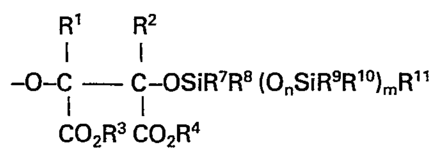

(IV)

darstellen,

$R^9$, $R^{10}$ die unter 3a) angegebene Bedeutung haben und

n für 0 oder 1,

m für 0 oder eine ganze Zahl von 1 bis 10 stehen, wobei die Verbindungen der Formel II im Falle 3) die über Siliciumatome bzw. Siliciumatom-haltige Gruppen verknüpfte Teilstruktur

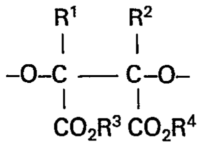

(V)

ein- bis zehnmal enthalten können und in den $SiR^7R^8 (O_nSiR^9R^{10})_mR^{11}$-Resten, wenn sie als Endgruppen fungieren, die Substituierten $R^7$, $R^8$ und $R^{11}$ die unter 3a) angegebene Bedeutung haben.

2. Verfahren zur Herstellung der Ether nach Anspruch 1, dadurch gekennzeichnet, dass man je ½Mol α-Ketoester der Formeln

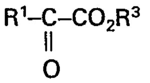

(VI)

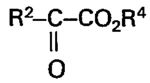

(VII)

in Gegenwart der äquivalenten Menge eines unedlen Metalls mit

0,4 bis 1,2, vorzugsweise 0,5 bis 1,1 Mol einer Organohalogenverbindung

$R^5X$ bzw. $R^6X$
(VIII) (IX)

wobei X für Chlor, Brom oder Jod steht und $R^5$ und $R^6$ die in Anspruch 1 unter 2.) angegebene Bedeutung haben, oder mit

0,4 bis 1,2, vorzugsweise 0,5 bis 1,1 Mol eines Monochlororganosilans, -di- oder -polysilans, -di- oder -polysiloxans der Formel

$$ClSiR^7R^8 (O_nSiR^9R^{10})_mR^{11} \quad (X)$$

oder mit

0,3 bis 0,8, vorzugsweise 0,4 bis 0,6 Mol eines Dichlororganosilans, -di- oder -polysilans, -di- oder -polysiloxans der Formel

$$Cl_2SiR^7 (O_nSiR^9R^{10})_mR^{11} \quad (XI)$$

oder mit

0,2 bis 0,6, vorzugsweise 0,2 bis 0,4 Mol eines Trichlororganosilans, -di- oder -polysilans, -di- oder -polysiloxans der Formel

$$Cl_3Si(O_nSiR^9R^{10})_mR^{11} \quad (XII)$$

wobei die Substituenten für die Formeln X bis XII jeweils die in Anspruch 1 under 3a) und die Indices die in Anspruch 1 angegebene Bedeutung haben,

oder mit 0,1 bis 0,7, vorzugsweise 0,2 bis 0,5 Mol Tetrachlorsilan

bei −10 bis +70 °C – sofern notwendig, unter Kühlung – in einem inerten aprotischen Lösungsmittel solange umsetzt, bis die exotherme Reaktion beendet ist, dass man dann hydrolysiert, die organische Phase abtrennt und das Lösungsmittel abzieht.

3. Verwendung der erfindungsgemässen Verbindung II als Initiatoren für radikalisch initiierbare Polymerisationsreaktionen.

**Revendications**

1. Ethers d'esters tartriques 1,2-disubstitués de formule

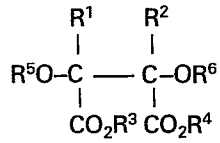

(II)

dans laquelle:

$R^1$, $R^2$ représentent des restes alkyle linéaires ou ramifiés en $C_1$–$C_{10}$ éventuellement substitués par un groupe méthoxy, du chlore ou du fluor, des restes cycloalkyle en $C_5$–$C_7$ éventuellement substitués par un groupe alkyle en $C_1$–$C_4$ ou méthoxy, ou du chlore ou du fluor, des restes arylalkyle en $C_7$–$C_{10}$ éventuellement substitués par un alkyle en $C_1$–$C_4$ ou méthoxy ou du chlore ou du fluor, des restes aryle en $C_6$–$C_{12}$ éventuellement substitués par un alkyle en $C_1$–$C_4$ ou méthoxy ou du chlore ou du fluor,

$R^3$, $R^4$ représentent des restes alkyle linéaires ou ramifiés en $C_1$–$C_{18}$ éventuellement substitués par un méthoxy ou du chlore ou du fluor, des restes cycloalkyle en $C_5$–$C_7$ éventuellement substitués par un groupe alkyle en $C_1$–$C_4$ ou méthoxy, ou du chlore ou du fluor, des restes arylalkyle en $C_7$–$C_{10}$ éventuellement substitués par un groupe alkyle en $C_1$–$C_4$ ou méthoxy, ou du chlore ou du fluor, les restes aryle en $C_6$–$C_{10}$ éventuellement substitués par un groupe alkyle en $C_1$–$C_4$ ou méthoxy, du chlore ou du fluor, des groupes triméthylsilyle, triéthylsilyle ou triphénylsilyle,

$R^5$ et $R^6$ représentent:

1) un atome d'hydrogène, à la condition que l'un au plus des deux substituants soit un atome d'hydrogène,

2) des restes alkyle en $C_1$–$C_{10}$ éventuellement substitués par un groupe méthoxy ou du chlore ou du fluor, des restes cycloalkyle en $C_5$–$C_7$ éventuellement substitués par un groupe alkyle en $C_1$–$C_4$ ou méthoxy, ou du chlore ou du fluor, des restes arylalkyle en $C_7$–$C_{10}$ éventuellement substitués par un groupe alkyle en $C_1$–$C_4$ ou méthoxy, ou du chlore ou du fluor ou bien,

3) $SiR^7R^8 (O_nSiR^9R^{10})_mR^{11}$ et

$R^7$, $R^8$, $R^{11}$ représentent:

a) un groupe méthyle, éthyle, phényle, benzyle, chlorométhyle, hydroxyle, méthoxy, éthoxy ou

b) un reste de formule

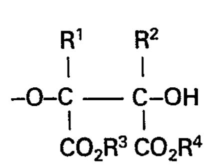

(III)

ou

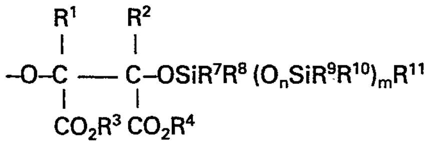
(IV)

$R^9$, $R^{10}$ ont la signification indiquée sous 3a), n est égal à 0 ou 1, m est égal à 0 ou à un nombre entier de 1 à 10, les composés de formule II dans le cas 3) pouvant contenir 1 à 10 fois la structure

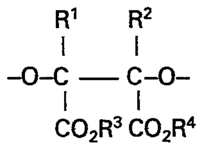
(V)

reliée par des atomes de silicium ou des groupes contenant un atome de silicium et les substituants $R^7$, $R^8$ et $R^{11}$ ont la signification indiquée sous 3a) dans les restes $SiR^7R^8(O_nSiR^9R^{10})_mR^{11}$ s'ils agissent comme groupements terminaux.

2. Procédé pour la préparation des éthers selon la revendication 1 caractérisé en ce que l'on fait réagir chaque fois ½ mole d'α-cétoester de formule

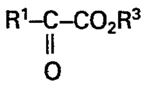
(VI)

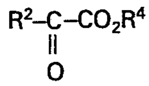
(VII)

en présence d'environ la quantité équivalente d'un métal non noble avec 0,4 à 1,2 mole, de préférence 0,5 à 1,1 mole d'un composé organahalogéné

$R^5X$ (VIII) ou $R^6X$ (IX)

dans lequel X représente le chlore, le brome ou l'iode et $R^5$ et $R^6$ sont tels que définis à la revendication 1 sous 2), ou bien avec 0,4 à 1,2 mole, de préférence 0,5 à 1,1 mole, d'un monochloro-organosilane, -di- ou -polysilane, ou -di- ou -polysiloxanne de formule

$ClSiR^7R^8(O_nSiR^9R^{10})_mR^{11}$ (X)

ou bien avec

0,3 à 0,8, de préférence 0,4 à 0,6 mole, d'un dichloro-organosilane, -di- ou -polysilane, -di- ou -polysiloxanne de formule

$Cl_2SiR^7(O_nSiR^9R^{10})_mR^{11}$ (XI)

ou bien avec

0,2 à 0,6 mole, de préférence 0,2 à 0,4 mole, d'un trichloro-organosilane, -di- ou -polysilane, -di- ou -polysiloxanne de formule

$Cl_3Si(O_nSiR^9R^{10})_mR^{11}$ (XII)

les substituants pour les formules X à XII ayant chaque fois la signification indiquée à la revendication 1 sous 3) et les indices, la signification indiquée à la revendication 1,

ou bien avec

0,1 à 0,7 mole, de préférence 0,2 à 0,5 mole, de tétrachlorosilane, à −10 à +70 °C – si nécessaire en refroidissant – dans un solvant aprotique inerte, jusqu'à ce que la réaction exothermique soit terminée, en ce que l'on hydrolyse ensuite, on sépare la phase organique et on élimine le solvant.

3. Utilisation des composés II selon l'invention comme initiateurs pour des réactions de polymérisation radicalaires.

**Claims**

1. Ethers of 1,2-disubstituted tartaric acid esters of the formula

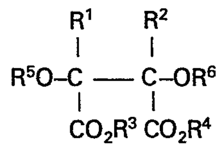
(II)

in which

$R^1$ and $R^2$ represent linear or branched $C_1$–$C_{10}$ alkyl radicals optionally substituted by methoxy, chlorine or fluorine, $C_5$–$C_7$ cycloalkyl radicals optionally substituted by $C_1$–$C_4$ alkyl, methoxy, chlorine or fluorine, $C_7$–$C_{10}$ aralkyl radicals optionally substituted by $C_1$–$C_4$ alkyl, methoxy, chlorine or fluorine, or $C_6$–$C_{12}$ aryl radicals optionally substituted by $C_1$–$C_4$ alkyl, methoxy, chlorine or fluorine

$R^3$ and $R^4$ represent linear or branched $C_1$–$C_{18}$ alkyl radicals optionally substituted by methoxy, chlorine or fluorine, $C_5$–$C_7$ cycloalkyl radicals optionally substituted by $C_1$–$C_4$ alkyl, methoxy, chlorine or fluorine, $C_7$–$C_{10}$ aralkyl radicals optionally substituted by $C_1$–$C_4$ alkyl, methoxy, chlorine or fluorine, $C_6$–$C_{10}$ aryl radicals optionally substituted by $C_1$–$C_4$ alkyl, methoxy, chlorine or fluorine, or trimethyl silyl radicals, triethyl silyl radicals or triphenyl silyl radicals,

$R^5$ and $R^6$ represent

1) a hydrogen atom with the proviso that at most one of the two substituents is a hydrogen atom,

2) $C_1$–$C_{10}$ alkyl radicals optionally substituted by methoxy, chlorine or fluorine, $C_5$–$C_7$ cycloalkyl radicals optionally substituted by $C_1$–$C_4$ alkyl, methoxy, chlorine or fluorine, $C_7$–$C_{10}$ aralkyl radicals optionally substituted by $C_1$–$C_4$ alkyl, methoxy, chlorine or fluorine, or

3) $SiR^7R^8(O_nSiR^9R^{10})_mR^{11}$ and

$R^7$, $R^8$ and $R^{11}$ represent

a) methyl, ethyl, phenyl, benzyl, chloromethyl, hydroxyl, methoxy or ethoxy, or

b) a radical of the formula

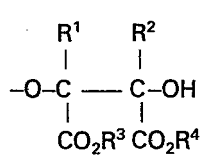
(III)

or

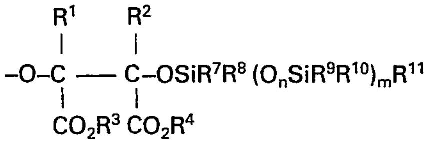

(IV)

$R^9$ and $R^{10}$ are as defined in 3a) and
n=0 or 1,
m=0 or an integer of from 1 to 10; and in which the compounds of the formula (II) in case (3) may contain the component structure (V):

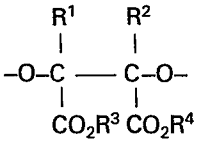

(V)

attached through silicon atoms or groups containing silicon atoms from 1 to 10 times and, in the $SiR^7R^8$ $(O_nSiR^9R^{10})_mR^{11}$-radicals where they function as terminal groups, the substituents $R^7$, $R^8$ and $R^{11}$ have the meanings defined in 3a).

2. A process for producing the ethers claimed in Claim 1, characterized in that 0,5 mole of each of the α-ketoesters of the formulae

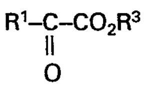

(VI)

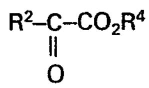

(VII)

is reacted in the presence of an equivalent quantity of a base metal with
from 0.4 to 1.2 moles, preferably from 0.5 to 1.1 moles, of an organohalogen compound

$R^5X$ (VIII) or $R^6X$ (IX)

in which X represents chlorine, bromine or iodine and $R^5$ and $R^6$ are as defined in Claim 1 under 2) or with
from 0.4 to 1.2 moles, preferably from 0.5 to 1.1 moles, of a monochloro-organosilane, disilane or polysilane, disiloxane or polysiloxane of the formula

$ClSiR^7R^8(O_nSiR^9R^{10})_mR^{11}$ (X)

or with
from 0.3 to 0.8 mole, preferably from 0.4 to 0.6 mole, of a dichloro-organosilane, disilane or polysilane, disiloxane or polysiloxane of the formula

$Cl_2SiR^7\ (O_nSiR^9R^{10})_mR^{11}$ (XI)

or with
from 0.2 to 0.6 mole, preferably from 0.2 to 0.4 mole, of a trichloro-organosilane, disilane or polysilane, disiloxane or polysiloxane of the formula

$Cl_3Si(O_nSiR^9R^{10})_mR^{11}$ (XII)

the substituents in formulae (X) to (XII) each having the meaning defined in Claim 1 under 3a) and the indices being as defined in Claim 1, or with from 0.1 to 0.7 mole, preferably from 0.2 to 0.5 mole, of tetrachlorosilane, at $-10$ to $+70$ °C – if necessary with cooling – in an inert aprotic solvent until the exothermic reaction is over, the resulting reaction product is hydrolyzed, the organic phase is separated off and the solvent is removed.

3. The use of the compounds (II) according to the invention as initiators for radically initiatable polymerization reactions.